# EUROPEAN PATENT APPLICATION

(11) **EP 1 968 324 A1**
(43) Date of publication of application: **10.09.2008**
(21) Application number: 07300826.0
(22) Date of filing: 27.02.2007
(51) Int. Cl.: H04N 7/26, H04B 7/26

(54) **Multicode CDMA wireless transmission of scalable video data**

(71) Applicant: Alcatel Lucent, 75008 Paris (FR)
(72) Inventor: The designation of the inventor has not yet been filed
(74) Representative: Schneider, Sandra

(57) **Abstract**

The present invention relates to α method for transmitting video data over an air interface (50) using CDMA technology. The invention further relates to a method for receiving video data over an air interface (50) using CDMA technology. Said video data comprises basic layer data (10) and enhancement layer data (20). The basic layer data (10) is transmitted and received using a first spreading code (SC1, C1). Said enhancement layer data is transmitted and received using a second spreading code (SC2, C4). The invention also relates to a transmitter for performing the method for transmitting video data over an air interface and a base station comprising said transmitter.

## Description

### BACKGROUND OF THE INVENTION

The present invention relates to a method for transmitting video data over an air interface using code division multiple access (CDMA) technology, said video data comprising basic layer data and enhancement layer data. The invention further relates to a transmitter for performing said method and a base station comprising said transmitter.

In the United States Patent Application Publication US 2004/O1OO586 A1 a system and method for scalable portrait video is described. The described portrait video refers to multi level video where the coding is ordered from outlines to details. The portrait video described is scalable because each video of a higher level always contains all the information of the video of a lower level and enhances the lower level video. The described portrait video allows for video conferencing over a low bit rate communication channel.

In the European Patent Specification EP 116648O B1 an apparatus and method for communicating multi media information over an air interface is described. The described apparatus and the described method convert packets of multi media data according to the RTP protocol (Real-Time Transport Protocol) into a radio-link format which can be transmitted over a special channel on the radio-link in an efficient manner. In a code division multiple access (CDMA) communication system the channel is realised by a unique code by which the multi media information to be communicated is encoded. Packetized multi media data is converted and transmitted over an air interface over one specific channel which is characterised by one specific code in a CDMA system.

In code division multiple access (CDMA) systems spreading codes are used to spread the base band data before transmission. The spreading codes are used to identify connections. They create uniqueness to enable call identification. Spreading codes of a FDD UMTS (frequency division duplex universal mobile technique communication system) for example may vary from 4 to 512 bits in length. The longer the spreading code the more gain can be achieved. This means that when using a longer spreading code less power can be used for the transmission and more spreading codes can be used in a CDMA cell. But a longer spreading code also means that the data is transmitted with a smaller bit rate. Using a shorter spreading code means that more power for the transmission has to be used due to the lower gain but also that a higher bit rate can be achieved. Spreading codes in a CDMA cell have to be uncorrelated. Codes are therefore assigned according to a code tree. When using a shorter code less codes can be assigned in a CDMA cell and as a consequence less users can communicate at the same time in the cell.

### OBJECT OF THE INVENTION

The object of the invention is to provide a method for transmitting scaleable video data over an air interface. Another object of the invention is to provide a transmitter and a base station for performing said method.

### SUMMARY OF THE INVENTION

This object and others that appear below are achieved by a method for transmitting video data over an air interface according to claim 1, a method of receiving video data over an air interface according to claim 8, a corresponding transmitter according to claim 9 and a corresponding base station according to claim 10.

The invention provides an architecture enabling scaleable video transmission, e. g. scaleable video broadcast. Scaleable video can be seen as multiple, e. g. two or more, hierarchical additive layers. This can be for example a basic layer providing a basic video quality and one or more enhancement layers providing finer quality improvements.

According to one aspect of the invention video data comprising basic layer data and enhancement layer data is transmitted over a CDMA air interface using different orthogonal spreading codes for the basic layer data and for the enhancement layer data. This allows to scale the different layers independently from each other.

According to a preferred embodiment of the invention the first spreading code applied to the basic layer data is shorter than the second spreading code applied to the enhancement layer data. This means that more of the available resources in one CDMA cell are used for the basic layer data than for the enhancement layer data. By applying a different power budget for each of the levels when transmitting the data, the area in which the video can be received can be influenced. When for example applying a high power budget to the basic layer data transmitted using the first spreading code which is shorter than the second spreading code, then the basic video quality reception area is quite large. Applying a lower power budget to the enhancement layer data which is transmitted using the second spreading code then the higher video quality reception area is smaller than the basic video quality reception area. According to this embodiment of the invention code division multiple access with a variable length of spreading codes is used for each layer of the video data stream and the transmit power is adjusted to fit the coverage requirements of the video reception area.

According to another preferred embodiment of the invention code division multiple access (CDMA) with a variable number of spreading codes is used for each layer of the video stream. The method for transmitting video data comprises the step of splitting the basic layer data in a first predefined number of parallel data streams and transmitting said first predefined number of parallel data streams using a first predefined number of spreading codes where one of said first predefined number of spreading codes is used for each data stream. The basic layer video data is then transmitted in parallel over multiple CDMA channels corresponding to multiple spreading codes.

According to another embodiment of the invention the enhancement layer data may also be split in multiple parallel data streams. The enhancement layer data is split in a second predefined number of parallel data streams and said second predefined number of parallel data streams is transmitted over the air interface using a second predefined number of spreading codes. One of the second predefined number of spreading codes is used for each data stream. The second predefined number of spreading codes is inferior to the first predefined number of spreading codes. This means that the basic layer data is transmitted over more codes than the enhancement layer data. This allows for further scalability of the video transmission.

If more than one enhancement layers are present in the video data the invention can be applied to these layers as well using one or more spreading codes to transmit the enhancement layers over the air interface. The number of spreading codes used is then lower for the higher layers than the number of spreading codes used for the lower layers.

According to another aspect of the invention, the spreading codes are preferably of equal length, when using multiple spreading codes to transmit the video data layers. This enables a fine scalability of the video transmission.

According to another aspect of the invention different power budget levels are applied for each video data layer. When for example using a shorter code for the basic layer data then a higher transmission power can be applied to the basic layer data providing a larger area of reception. When for example using variable numbers of spreading codes for each layer then the transmission power can be adjusted per layer to scale the coverage of the video reception. In general it is preferable to apply a higher transmission power to the transmission of the basic layer data and a lower transmission power to the transmission of the enhancement layer data. If more then one enhancement layer is present then the higher the layer the lower the transmission power applied should be chosen.

According to another aspect of the invention video data comprising basic layer data and enhancement layer data is received over an air interface using CDMA technology. The inventive method comprises the steps of receiving said basic layer data using a first spreading code and receiving said enhancement layer data using a second spreading code. The first spreading code and the second spreading code are distinct and orthogonal to each other. A transmitter for performing said method for transmitting video data comprises a scalable video coder for converting the video data into video data comprising a basic layer and at least one enhancement layer. The transmitter also comprises a CDMA coder. The CDMA coder among other things applies the spreading code to the video data. The transmitter also comprises a modulation device, a power amplification device and a transmission power control device.

A receiver for receiving video data over an air interface comprises a reception device, a de-modulation device and a CDMA decoder. The CDMA decoder among others applies the spreading code to the data to decode the data. The receiver also comprises a scalable video decoder to decode video data arriving as video data comprising several layers, e. g. a base layer and at least one enhancement layer.

A base station comprising an inventive transmitter is able to provide a video data transmission with scaleable video data quality reception areas. This is especially advantageous for video broadcast.

### BRIEF DESCRIPTION OF THE DRAWINGS

Other characteristics and advantages of the invention will become apparent in the following detailed description of preferred embodiments of the invention illustrated by the accompanying drawings given by way of non limiting illustrations.
Figure 1 shows a schematic overview over an inventive transmitter and an inventive receiver,
Figure 2 shows another embodiment of an inventive transmitter and an inventive receiver, and
Figure 3 shows a spatial scheme of reception areas of scalable video data streams.

### DETAILED DESCRIPTION OF THE INVENTION

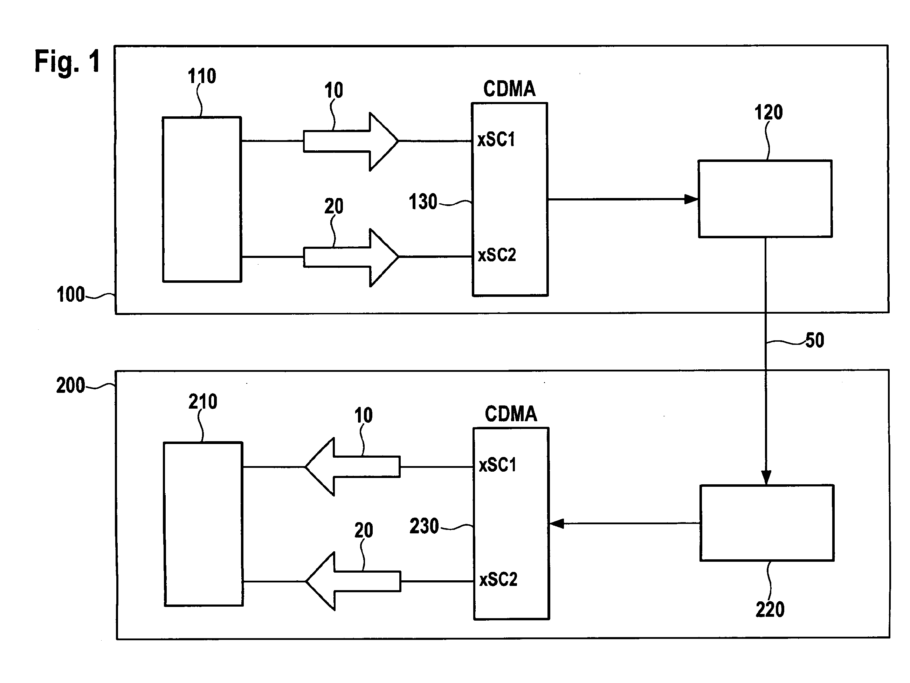

Figure 1 shows a schematic overview of a transmitter 100 and a receiver 200 performing the inventive method. The transmitter 100 transmits data over an air interface 50 to a receiver 200. The transmitter 100 comprises a scaleable video coder 110 which outputs video data comprising a basic layer 10 and an enhancement layer 20. The basic layer 10 data is then coded in the CDMA coder 130 using a first spreading code SC1. The enhancement layer 20 data is encoded in the CDMA coder 130 using a second spreading code SC2. In the CDMA coder 130 other preparations of the data for the transmission is also done e. g. applying a scrambling code used for the CDMA transmission. The device 120 comprises a modulator for modulating the data, a power amplifier for amplifying the signal and a transmission power control device.

The receiver 200 receives data over the air interface 50. The device 220 comprises the reception device and a demodulator for demodulating the signal. In the CDMA coder 230 the CDMA signal is decoded, the decoding comprises applying the first spreading code SC1 to the received signal and applying the second spreading code SC2 to the signal. By this the basic layer 10 video data is decoded using the spreading code SC1 and the enhancement layer 20 video data is decoded using a spreading code SC2. In the scalable video decoder 210 the video data comprising the layers 10 and 20 is again decoded to the video data signal.

Since different orthogonal codes are used for different layers, the receiver 200 is able to separate the video layers 10 and 20. The transmitted power of each layer is controlled by for example the length of the spreading code applied to the layer or for example through the number of spreading codes used. The usual transmission power control of a CDMA system can also be applied.

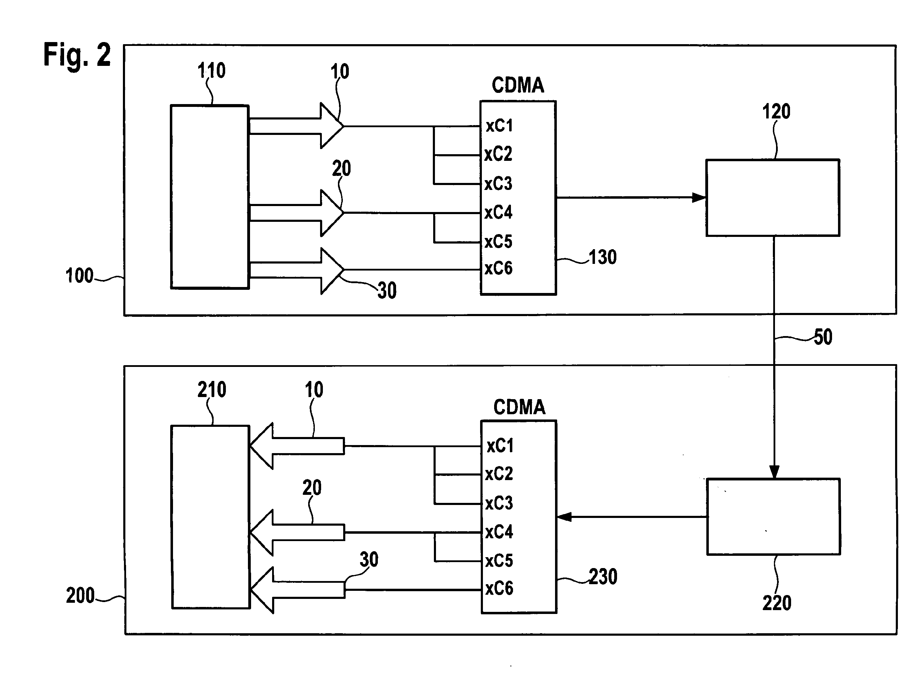

Figure 2 shows a transmitter 100 and a receiver 200 of a highly preferred embodiment of the invention. The same or similar elements shown in figure 2 may have the same reference numerals as in figure 1. The transmitter 100 also comprises a scaleable video coder 110. The scaleable video coder 110 as shown in figure 2 codes the video data into 3 layers 10, 20, 30. The 3 layers are a basic layer 10, an enhancement layer 20 and a further enhancement layer 30. The transmitter 100 then splits the basic layer 10 into 3 parallel data streams. Each of the 3 parallel data streams of the basic layer 10 is encoded by the CDMA coder using first predefined number of spreading codes. In the example shown in figure 2 three spreading codes are used for the 3 parallel data streams of the basic layer 10. The data of the basic layer 10 is encoded using the spreading codes C1, C2 and C3. The CMDA coder 130 of the transmitter 100 also performs further coding necessary for CDMA transmission. The transmitter 100 splits the enhancement layer 20 data into 2 parallel data streams. Those 2 data streams are encoded by the CDMA coder 130 using the spreading codes C4 and C5. The further enhancement layer 30 is encoded using the spreading code C6. The device 120 comprises a modulator, a power amplifier and a transmission power control device. The video data is then transmitted over the air interface 50 to the receiver 200.

The device 220 of the receiver 200 comprises a reception module and a demodulator. The demodulated signal is then applied to the CDMA coder 230. Among other treatments necessary for CDMA decoding the CDMA decoder applies the spreading codes C1, C2, C3, C4, C5 and C6 to the signal. Using the spreading codes C1, C2 and C3 the 3 parallel data streams of the basic layer 10 video data are decoded. Using the spreading codes C4 and C5 the 2 parallel data streams of the enhancement layer 20 are decoded. Using the spreading code C6 the data stream of the further enhancement layer 30 is decoded. The 3 layers 10, 20, 30 are applied to the scaleable video decoder 210 which recomposes the video data from the 3 layers 10, 20 and 30.

As different orthogonal spreading codes are used the receiver 200 is able to separate the 3 video layers 10, 20, 30. The transmitted power of each layer is controlled through the number of spreading codes used and the transmission power control comprised in device 120 of the transmitter 100. In figure 2 the basic layer 10 is transmitted over 3 CDMA spreading codes C1, C2 and C3 and adequate transmission power per code is applied in the device 120 in order to ensure good quality and coverage to the cell edge. Similarly the enhancement layer 20 is transmitted using 2 codes C4 and C5 and the highest quality layer, the further enhancement layer 30, is transmitted over one code C6. Adequately controlled transmission power is applied to each code channel. By applying such power distribution, a scaleable reception scheme can be achieved on the side of a receiving terminal comprising a receiver 200.

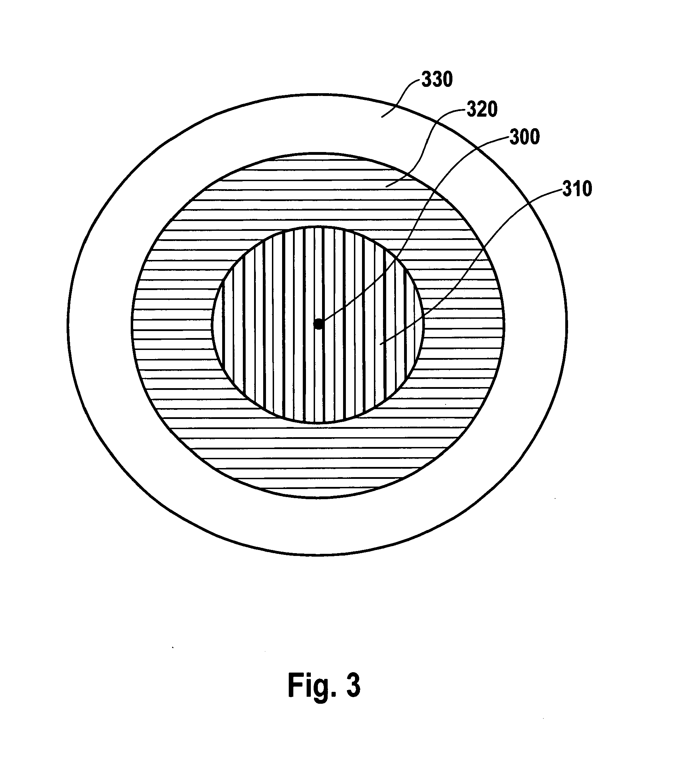

An example of an advantageous scalable reception scheme is shown in figure 3. A hierarchical reception coverage as shown in figure 3 can be achieved by applying the invention. Figure 3 shows a base station 300 and a special scheme for reception of scaleable video streams transmitted by the base station 300. In the region 310 high quality video reception is possible. This means that not only the basic layer of video data can be received but also the enhancement layers present. For the example shown in figure 2 this would mean that all 3 layers-the basic layer 10, the enhancement layer 20 and the further enhancement layer 30 - can be received in the area 310. In the area 320 medium quality video reception is possible. For the example shown in figure 2 this would mean that the basic layer 10 and the enhancement layer 20 can be received in the area 320. In the area 330 a basic video quality reception is possible this would mean for the example shown in figure 2 that only the basic layer 10 can be received in the area 330. Such as scaleable reception scheme as shown in figure 3 can be easily achieved by applying the invention.

Different orthogonal spreading codes and different power budget for each video layer 10, 20, 30 can be applied in order to provide a scaleable scheme as shown in figure 3. Code division multiple access with a variable number of CDMA codes is used for each layer 10, 20, 30 of the video stream and the transmitted power can be adjusted to achieve the coverage requirements e. g. of the type shown in figure 3.

The inventive solution as shown in figure 1 or figure 2 benefits from flexibility of CDMA codes to provide a scaleable video transmission chain. To this scheme it is easy to allocate link resources to many input video streams. It is also possible to control dynamically resource sharing e. g. according to radio measurements etc. Resource sharing can for example be controlled dynamically by adjusting the power budget assigned to each stream. The power budget assigned to each stream may be influenced by the number of CDMA codes assigned or the length of the CDMA spreading codes assigned. The dynamic control of the power budget may also be done by modifying the scaleable video coder 110 in the transmitter 100 and the scaleable video decoder 210 in the receiver. This can easily be done. An additional advantage is that synchronisation between different video layers is automatically achieved. Moreover, a fine grain scalability can be achieved.

The solution offers flexible scheme to handle scaleable video e. g. MPEG/H26X-SVC. The air interface used can for example a wide band CDMA or UMTS system.

## Claims

1. Method for transmitting video data over an air interface (50) using CDMA technology, said video data comprising basic layer data (10) and enhancement layer data (20), said method comprising the steps of transmitting said basic layer data (10) using a first spreading code (SC1, C1) and
transmitting said enhancement layer data (20) using a second spreading code (SC2, C4).

2. Method according to claim 1, **characterized by**
said first spreading code (SCl) being shorter than said second spreading code (SC2).

3. Method according to claim 1, further comprising the steps of
splitting the basic layer data (10) in a first predefined number of parallel data streams,
transmitting said first predefined number of parallel data streams using a first predefined number of spreading codes (C1, C2, C3),
whereas one of said first predefined number of spreading codes is used for each data stream, and
said first predefined number of spreading codes (C1, C2, C3) comprises said first spreading code (C1).

4. Method according to claim 3, further comprising the steps of
splitting the enhancement layer data (20) in a second predefined number of parallel data streams,
transmitting said second predefined number of parallel data streams using a second predefined number of spreading codes (C4, C5), whereas one of a second predefined number of spreading codes is used for each data stream, said second predefined number of spreading codes (C4, C5) comprising said second spreading code (C4), and
said first predefined number of spreading codes (C1, C2, C3) being higher than said second predefined number of spreading codes (C4, C5).

5. Method according to claim 4, **characterized by**
said spreading codes (C1, C2, C3, C4, C5) being of equal length.

6. Method according to claim 1, **characterized by**
applying a first transmission power to the transmission of said basic layer data (10) and a second transmission power to the transmission of said enhancement layer data (20), said first transmission power being higher than said second transmission power.

7. Method according to claim 1, **characterized by**
said video data comprising one or more further enhancement layers in addition to said basic layer and said enhancement layer.

8. Method for receiving video data over an air interface (50) using CDMA technology, said video data comprising basic layer data (10) and enhancement layer data (20), said method comprising the steps of receiving said basic layer data (10) using a first spreading code (SC1, C1) and said enhancement layer data (20) using a second spreading code (SC2, C2).

9. Transmitter (100) adapted to perform the method according to claim 1.

10. Base station (300) comprising a transmitter (100) according to claim 9.
